# EUROPEAN PATENT APPLICATION

(11) **EP 4 307 150 A1**
(43) Date of publication of application: **17.01.2024**
(21) Application number: 21930371.6
(22) Date of filing: 20.12.2021
(51) Int. Cl.: G06F 21/62, G05B 19/05

(54) **CONTROL SYSTEM AND METHOD FOR CONTROLLING SAME**

(30) Priority: 12.03.2021 JP 2021040012
(71) Applicant: OMRON Corporation, Kyoto 600-8530 (JP)
(72) Inventor: KITAMURA, Yasuhiro, Kyoto-shi, Kyoto 600-8530 (JP); IGARASHI, Hisanori, Kyoto-shi, Kyoto 600-8530 (JP); OKAMURA, Kotaro, Kyoto-shi, Kyoto 600-8530 (JP)
(74) Representative: Mewburn Ellis LLP
(86) International application number: PCT/JP2021/046973
(87) International publication number: WO 2022/190526

(57) **Abstract**

An access authority is set for each data referred to by a program. A control system includes a control unit that controls a control target, a storage unit that stores a program executed by the control unit and each access authority (500, 510) for each of a plurality of data referred to by the program, and an input unit that receives an access request for any one of the plurality of data. Each access authority (500, 510) includes information about an operation that can be executed by a user having each authority. The control unit refers to each access authority (500, 510) based on acquisition of the access request for any one of the plurality of data from the input unit, and determines whether the user who transmits the access request has the access authority (500, 510) for the data for which the access is requested based on each access authority (500, 510).

## Description

### TECHNICAL FIELD

The present disclosure relates to a control system, and more specifically, to access control of the control system.

### BACKGROUND ART

Machines and facilities used in a production site using factory automation (FA) are typically controlled by a control device such as a programmable controller (hereinafter, also referred to as "PLC"). These control devices store data indicated by a variable or a physical memory. The user can check or change a setting of the control device by referring to or changing these variables or the data indicated by the variable or physical memory. Also, some data may include important settings. For this reason, there is a need for an access control technique that appropriately sets a security level for each variable or physical memory or the data indicated by the variable or physical memory.

Regarding the access control of the control device, for example, Japanese Patent Laying-Open No. 2016-134137 (PTL 1) discloses a programmable display including "user management means configured to identify a user who accesses the programmable display; generation means configured to generate an interface screen including information from a control device according to an authority given to the user identified by the user management means; a display unit configured to output the interface screen; and connection management means configured to establish connection with an external device based on an identification result of the user by the user management means in response to an access request of the user from the external device and send the interface screen to the external device to which the connection is established, in which the user management means hinders simultaneous access of a plurality of users to which different authorities are given to the programmable display" (see [Abstract]).

### CITATION LIST

### PATENT LITERATURE

PTL 1: Japanese Patent Laying-Open No. 2016-134137

### SUMMARY OF INVENTION

### TECHNICAL PROBLEM

According to the technique disclosed in PTL 1, an access authority cannot be set for each data referred to in a program. Accordingly, there is a need for the technique for setting the access authority for each data referred to in the program.

The present disclosure has been made in view of the above background, and an object in one aspect of the present disclosure is to provide a technique for setting the access authority for each data referred to in the program.

### SOLUTION TO PROBLEM

According to an example of the present disclosure, a control system is provided. The control system includes a control unit configured to control a control target, a storage unit configured to store a program executed by the control unit and an access authority for each of a plurality of data referred to in the program, and an input unit configured to receive an access request for any one of the plurality of data. Each access authority includes information about an operation executable by each of users having different authorities. The control unit refers to each access authority based on acquisition of the access request for any one of the plurality of data from the input unit, and determines whether the user who transmits the access request has an access authority to access data for which the access is requested, based on each access authority.

According to this disclosure, the control system can determine whether to accept an access request for each of the plurality of data referred to in the program based on each access authority for each of the plurality of data referred to by the program.

In the above disclosure, each of the plurality of data is the data indicated by an address of a variable or a physical memory in a program.

According to this disclosure, the control system can determine whether to accept an access request for each variable or each physical memory based on each access authority for each of the plurality of data referred to by the program.

In the above disclosure, the storage unit further stores information about a write range for each of the variable or the physical memory. The control unit restricts a range of a value writable for the variable or the physical memory in which the access request is made based on the information about the write range.

According to this disclosure, the control system can restrict the range of the writable value for the variable or physical memory for which the access request is made.

In the above disclosure, the access authority for each of the plurality of data is generated based on a first rule defining the access authority for each variable name or a second rule defining the access authority for each physical memory.

According to this disclosure, the control system can automatically generate the access authority for each of the plurality of data based on the first rule or the second rule.

In the above disclosure, the control system further includes a device configured to generate the program. The device analyzes the program based on the first rule or the second rule, generates each access authority based on an analysis result, and outputs each access authority to the storage unit.

According to this disclosure, the control system can generate the access authority to each of the plurality of data by the device.

In the above disclosure, the storage unit further stores the first rule or the second rule. The control unit analyzes the program using the first rule or the second rule based on acquisition of the program from another device, generates each access authority based on an analysis result, and outputs each access authority to the storage unit.

According to this disclosure, in the control system, the control unit can generate the access authority to each of the plurality of data.

In the above disclosure, the control unit stores an update history in the storage unit based on an update of any one of the plurality of data referred to in the program. The update history includes an address of a variable name or a physical memory that indicates the updated data, the updated data, and a user identifier of a user who updates the data.

According to this disclosure, the control system can generate the update history based on the update of any one of the plurality of data referred to by the program. In addition, the user can check whether unauthorized update processing exists by viewing the update history.

According to another example of the present disclosure, a control method for a control system is provided. The control method includes accessing a program executed by a control device and an access authority for each of a plurality of data referred to in the program. Each access authority includes information about an operation executable by each of users having different authorities. The control method further includes referring to each access authority based on acquisition of the access request for any one of the plurality of data, and determining whether a user who transmits the access request has an access authority to access data for which the access is requested, based on each access authority.

According to this disclosure, whether to accept the access request for each of the plurality of data referred to by the program can be determined based on each access authority for each of the plurality of data referred to by the program.

In the above disclosure, each of the plurality of data is the data indicated by an address of a variable or a physical memory in a program.

According to this disclosure, whether to accept the access request for each variable or each physical memory can be determined based on each access authority for each of the plurality of data referred to by the program.

In the above disclosure, the control method further includes accessing information about a write range for each of the variable or the physical memory, and restricting a range of a value writable for the variable or the physical memory in which the access request is made based on the information about the write range.

According to this disclosure, the range of the writable value with respect to the variable or physical memory in which the access request is made can be restricted.

In the above disclosure, the access authority for each of the plurality of data is generated based on a first rule defining the access authority for each variable name or a second rule defining the access authority for each physical memory.

According to this disclosure, the access right for each of the plurality of data can be automatically generated based on the first rule or the second rule.

In the above disclosure, the control method further includes: analyzing the program based on the second rule; generating each access authority based on an analysis result; and outputting each access authority.

According to this disclosure, the access authority for each of the plurality of data can be generated.

In the above disclosure, the control method further includes generating an update history based the update of on any one of the plurality of data referred to by the program. The update history includes an address of a variable name or a physical memory that indicates the updated data, the updated data, and a user identifier of a user who updates the data.

According to this disclosure, the update history can be generated based on the update of any one of the plurality of data referred to in a program. In addition, the user can check whether unauthorized update processing exists by viewing the update history.

### ADVANTAGEOUS EFFECTS OF INVENTION

According to an embodiment, the access authority for each data referred to in the program can be set.

The foregoing and other objects, features, aspects and advantages of the present disclosure content will become more apparent from the following detailed description of the present disclosure when taken in conjunction with the accompanying drawings.

### BRIEF DESCRIPTION OF DRAWINGS

Fig. 1 is a view schematically illustrating an overall configuration of a network system 100 including a control system 1 according to an embodiment.
Fig. 2 is a view illustrating a configuration example of the control system 1 of the embodiment.
Fig. 3 is a schematic diagram illustrating a hardware configuration example of a control unit 200 configuring the control system 1 of the embodiment.
Fig. 4 is a schematic diagram illustrating a hardware configuration example of a support device 110 that may be connected to the control system 1 of the embodiment.
Fig. 5 is a view illustrating an example of operation authority information 500 about a variable and operation authority information 510 about a physical memory.
Fig. 6 is a view illustrating an example of write range information 600 about the variable and write range information 610 about the physical memory.
Fig. 7 is a view illustrating an example of user account information 700.
Fig. 8 is a view illustrating an example of a variable rule 800 and a physical memory rule 810.
Fig. 9 is a view illustrating an example of a variable master 900 and a physical memory master 910.
Fig. 10 is a view illustrating an example of an access request to the control unit 200.
Fig. 11 is a view illustrating an example of a generation procedure of access control information 322.
Fig. 12 is a view illustrating an example of an access control procedure by the control unit 200.

### DESCRIPTION OF EMBODIMENT

Hereinafter, an embodiment of the technical idea according to the present disclosure will be described with reference to the drawings. In the following description, the same component is denoted by the same reference numeral. Names and functions of such components are also the same. Accordingly, the detailed description thereof will not be repeated.

### <A. Application example>

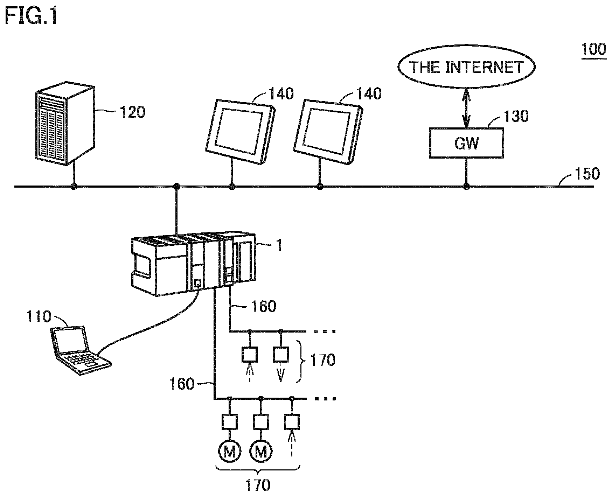

Fig. 1 is a view schematically illustrating an overall configuration of a network system 100 including the control system 1 of the embodiment. A scene to which the technique of the embodiment is applied will be described with the configuration in Fig. 1 as an example.

A network system 100 includes the control system 1, a server device 120, a display device 140, and a gateway (GW) 130 as a configuration. These configurations can be connected to each other through a network 150. Network 150 is connected to the Internet that is an external network through gateway 130. Ethernet (registered trademark) or EtherNet/IP (registered trademark), which is a general network protocol, may be implemented as network 150.

Control system 1 is connected to a control target 170 including field facilities and devices and various devices (sensors, actuators, or the like) disposed therein through a field network 160.

Preferably a bus or a network that performs fixed period communication guaranteeing a data arrival time is adopted as field network 160. In one aspect, field network 160 may be implemented by EtherCAT (registered trademark) as the bus or the network that performs such the fixed cycle communication.

A support device 110 provides a support tool that supports a user to operate control system 1. Support device 110 may have a function of installing a program in control system 1. In one aspect, support device 110 may be a personal computer, a tablet, a smartphone, or any other information processing device.

As an example, support device 110 is detachably connected to control system 1 by a universal serial bus (USB). In the USB communication, a communication protocol that performs user authentication can be adopted in order to ensure communication security. As another example, support device 110 may communicate with control system 1 through network 150.

As an example, server device 120 is a database system or a manufacturing execution system (MES). The manufacturing execution system acquires the information from a manufacturing device or facility of a control target to monitor and manage entire production, and can also handle order information, quality information, shipping information, and the like. Furthermore, as another example, server device 120 may be a device that provides an information-related service (processing for acquiring various types of information from the control target and performing macro or micro analysis or the like).

Display device 140 receives an operation from the user, outputs a command or the like corresponding to the user operation to control system 1, and graphically displays an arithmetic result or the like in control system 1. In one aspect, display device 140 may include an arbitrary output device such as a liquid crystal display or an organic electro-luminescence (EL) display. Furthermore, display device 140 may include an arbitrary input device such as a touch panel or a switch.

Gateway 130 executes protocol conversion between network 150 and the external network (the Internet) and processing as a firewall.

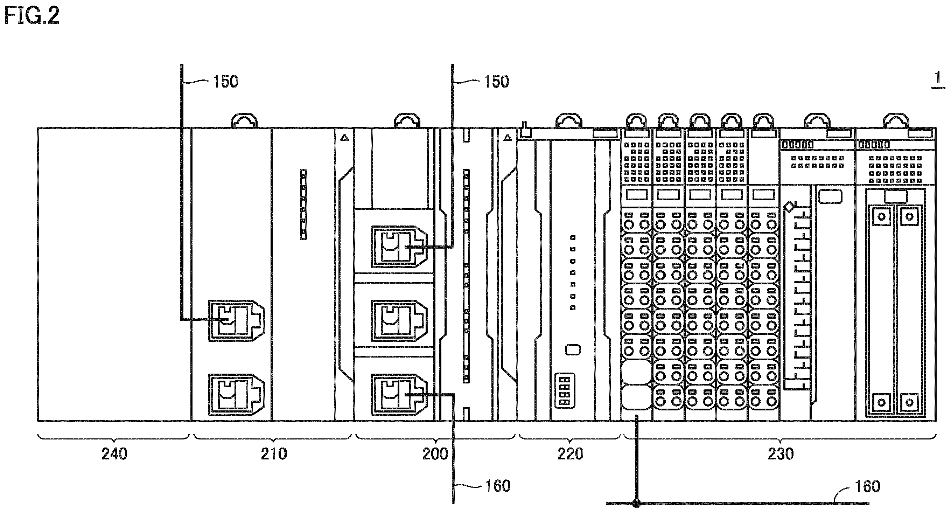

In the configuration of Fig. 1, control system 1 (more specifically, a control unit 200 (see Fig. 2)) can control control target 170 on field network 160 and communicate with each device on network 150 based on the installed program. The user can check or change the function of control system 1 by referring to or changing a value indicated by a variable used in the program installed in control system 1 or a value indicated by a physical memory of control system 1. The user may refer to or update the setting value of control unit 200 as the value referred to in the program installed in control unit 200. The value is defined as the variable in the program or the value stored in the physical memory. Consequently, the user can refer to or update the value by designating the variable or the physical memory in the program. The value indicated by the variable referred to in the program installed in control system 1 and the value indicated by the physical memory of control system 1 may be data including not only a numerical value but also information about an arbitrary format such as a character.

As an example, control system 1 includes important instructions such as port closing, virtual private network (VPN) validity/invalidity, and a change in access control. Changes in these important instructions can greatly affect the functions, security, and the like provided by control system 1. Accordingly, control system 1 has a function performing the access control for each value indicated by the variable or the physical memory, thereby improving a security function of control system 1.

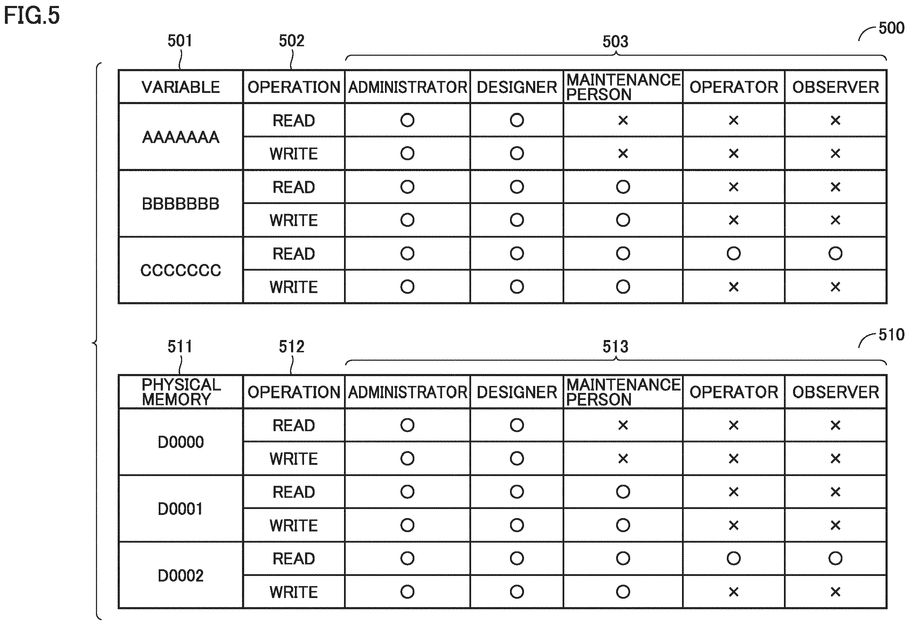

More specifically, control system 1 includes both or one of variable operation authority information 500 and physical memory operation authority information 510 (see Fig. 5). Variable operation authority information 500 includes an access authority for each value indicated by the variable. As an example, the value indicated by the variable is a value stored in an address of the physical memory indicated by a certain variable. Physical memory operation authority information 510 includes the access authority for each value indicated by the physical memory. As an example, the value indicated by the physical memory is a value stored in the address of a certain physical memory. In addition, the value includes the variable or the arbitrary value indicated by the physical memory, and for example, may also include the value indicating empty such as NULL. The access in the embodiment may include read processing, write processing, and the like. In addition, the access authority in the embodiment may include the authority of the read processing and the authority of the write processing and the like.

In one aspect, the access authority for each value indicated by the variable or the physical memory may be set for each authority or attribute (administrator, designer, or the like) of a user account. In another aspect, the access authority for each value indicated by the variable or the physical memory may be set for each individual user account. Hereinafter, the access authority will be described as an access authority to the data (value), but it can also be said that the access authority in the embodiment is an access authority of a reference. At this point, the reference means the variable indicating the location of the data, a physical address, and the like. For this reason, the access authority for the data (value) indicated by the variable or the data (value) indicated by the physical address may also be said to be the access authority for the reference.

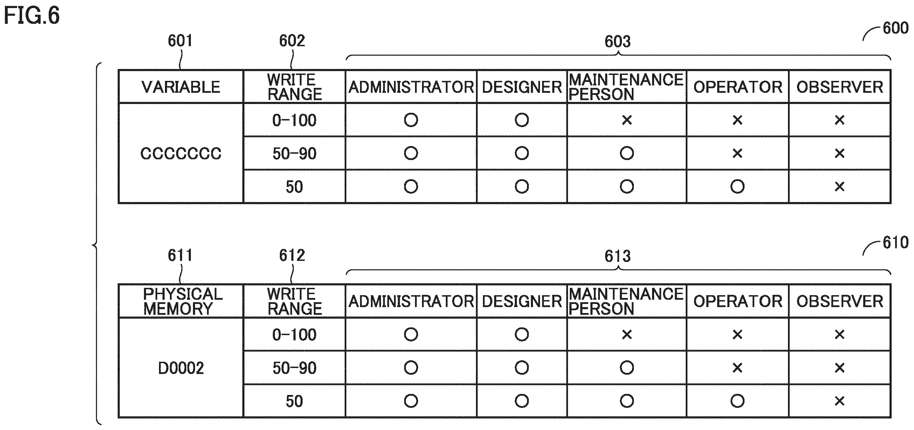

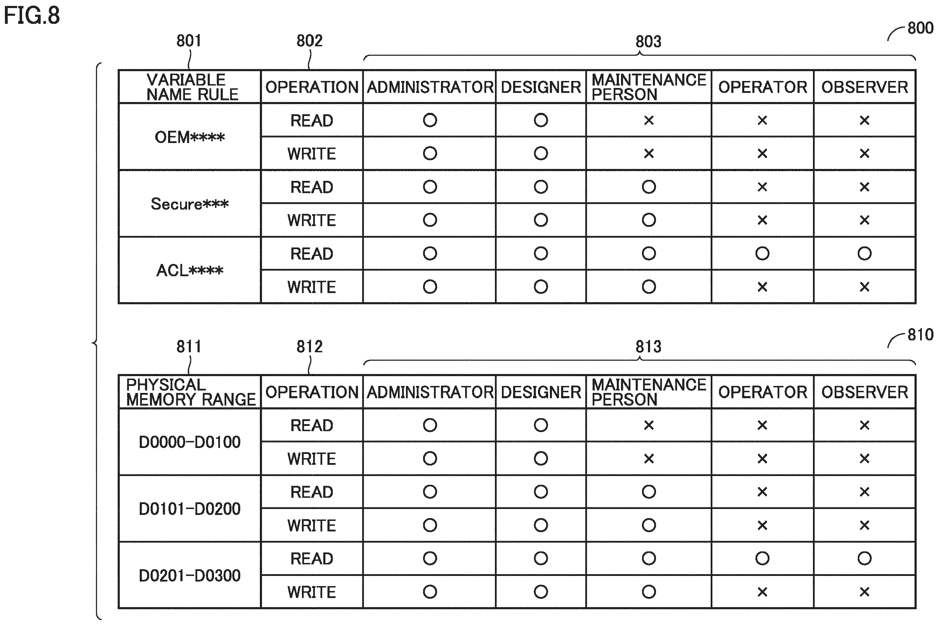

Therefore, the technique of the present disclosure is also established by replacing an access request and an access authority for the data (value) indicated by the variable or the physical address with an access request and an access authority for the reference (variable or physical address). In this case, variables 501, 601, physical memories 511, 611, and the like illustrated in Figs. 5 and 6 can also be read as the reference. A variable name rule 810 and a physical memory range 811 in Fig. 8 can also be read as a reference name rule and a reference range.

Control system 1 specifies the authority of the user account based on acceptance of the access request for the value indicated by the variable or the physical memory. Subsequently, control system 1 refers to variable operation authority information 500 or physical memory operation authority information 510, and determines whether the user account that transmits the access request has the authority to change the value of the variable of the access request. Variable operation authority information 500, physical memory operation authority information 510, a generation method thereof, and the like will be described later.

The fact that a certain user account has read or write authority for a value X means that the user account has the authority to refer to or update value X indicated by the variable or the physical memory. In addition, the fact that a certain user account has read or write authority for a variable A means that the user account has the authority to refer to or update the value indicated by variable A. In addition, the fact that a certain user account has read or write authority to a physical memory B means that the user account has the authority to refer to or update the value (the value stored in physical memory B) indicated by physical memory B.

### <B. Hardware configuration>

A hardware configuration example of each device included in network system 100 of the embodiment will be described below.

### (a. Appearance of control system 1)

Fig. 2 is a view illustrating a configuration example of control system 1 of the embodiment. With reference to Fig. 2, control system 1 includes control unit 200, security unit 210, a safety unit 220, one or a plurality of functional units 230, and a power supply unit 240.

Control unit 200 and security unit 210 are connected to each other through a bus of PCI Express or the like. In addition, control unit 200, safety unit 220, the one or more functional units 230, and power supply unit 240 are mutually connected through an internal bus.

For example, control unit 200 includes a programmable controller (PLC). Control unit 200 controls a control target by executing a control program. The control program includes a program such as IO refresh and control arithmetic processing for exchanging signals with an instrument and a device to be controlled, and various devices (sensors, actuators, or the like) disposed in the instrument and the device. Specifically, the IO refresh collects the output of an order value calculated in control unit 200 to the control target, or the input value from the control target. In the control arithmetic processing, for example, the order value or a controlled value based on the input value collected by the IO refresh is calculated. The control program having such a function is also an example of a "user program" including a program produced by the user or a development company according to a required specification of the control target.

Security unit 210 sets the security of control system 1, more specifically, of control unit 200. The security setting includes a setting preventing unintended duplication of the control program, namely, unauthorized duplication. Safety unit 220 executes control arithmetic operation implementing the safety function regarding the control target independently of control unit 200. Functional unit 230 provides various functions implementing the control on various control targets by control system 1. Functional unit 230 may typically include an I/O unit, a safety I/O unit, a communication unit, a motion controller unit, a temperature adjustment unit, a pulse counter unit, and the like. Examples of the I/O unit include a digital input (DI) unit, a digital output (DO) unit, an analog output (AI) unit, an analog output (AO) unit, a pulse catch input unit, and a composite unit obtained by mixing a plurality of types. The safety I/O unit is in charge of I/O processing regarding the safety control. Power supply unit 240 supplies power of a predetermined voltage to each unit configuring control system 1.

### (b. Hardware configuration of control unit 200)

A hardware configuration example of control unit 200 included in control system 1 of the embodiment will be described below.

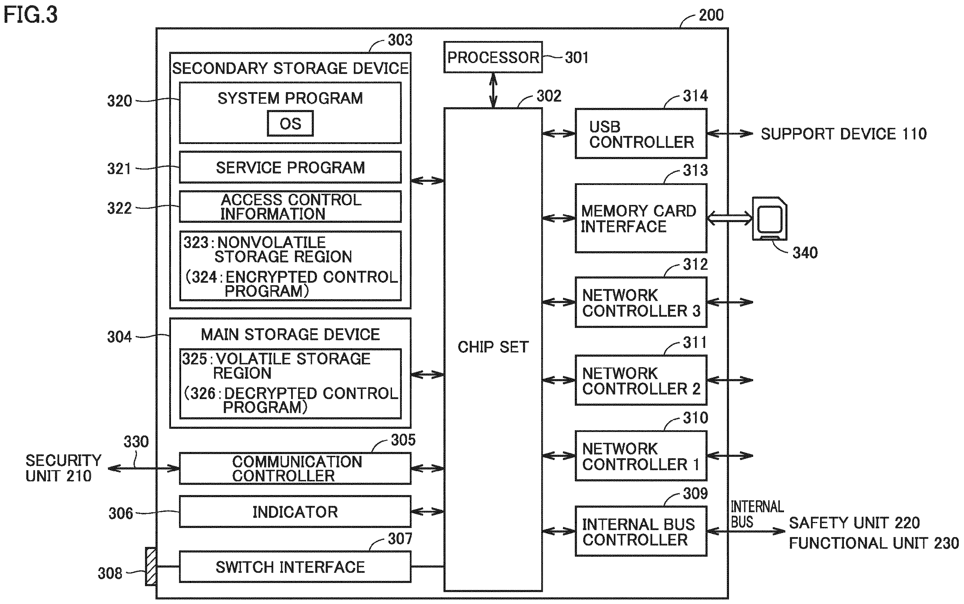

Fig. 3 is a schematic diagram illustrating a hardware configuration example of control unit 200 configuring control system 1 of the embodiment. With reference to Fig. 3, control unit 200 includes a processor 301 such as a central processing unit (CPU) or a graphical processing unit (GPU), a chip set 302, a secondary storage device 303, a main storage device 304, a communication controller 305, a USB controller 314, a memory card interface 313, a network controller 310, 311, 312, an internal bus controller 309, an indicator 306, and a switch interface 307 as main components.

Processor 301 reads various programs stored in secondary storage device 303 and develops and executes the various programs in main storage device 304, thereby implementing various pieces of processing including the control arithmetic operation and service processing. Chip set 302 mediates the exchange of the data between processor 301 and each component, thereby implementing the processing of control unit 200 as a whole.

Main storage device 304 includes a volatile storage device such as a dynamic random access memory (DRAM) or a static random access memory (SRAM). At least a part of these volatile storage devices configures a volatile storage region 325 storing a decoded control program 326.

Secondary storage device 303 typically includes a nonvolatile storage device such as a hard disk drive (HDD) or a solid state drive (SSD), a read only memory (ROM), an erasable programmable read only memory (EPROM), or an electrically erasable programmable read only memory (Electrically Erasable Programmable Read-Only Memory). At least a part of the non-volatile storage device configures a nonvolatile storage region 323 storing an encrypted control program 324.

Secondary storage device 303 further stores a system program 320 including an OS, a service program 321, access control information 322, and the like. Access control information 322 includes various types of information used for the access control in the value indicated by the variable or physical memory illustrated in Figs. 5 to 9. System program 320 provides a program execution environment operating user programs such as decoded control program 326 and service program 321.

Communication controller 305 transmits and receives data to and from security unit 210 through a bus 330. For example, communication controller 305 can be implemented by a communication chip corresponding to the bus such as PCI Express.

Indicator 306 notifies an operation state or the like of control unit 200, and is configured by one or a plurality of light emitting diodes (LEDs) or the like arranged on a unit surface. As an example, switch interface 307 is connected to dip switch 308, and outputs an ON or OFF signal of dip switch 308 to processor 301.

Internal bus controller 309 transmits and receives the data to and from safety unit 220 configuring control system 1 and one or a plurality of functional units 230 through the internal bus. For the internal bus, a communication protocol unique to a manufacturer may be used, or a communication protocol that is the same as or compliant with any of industrial network protocols may be used.

Each of network controllers 310, 311, 312 is in charge of the data exchange with any device through the network. Network controller 310, 311, 312 may adopt an industrial network protocol such as EtherCAT (registered trademark), EtherNet/IP (registered trademark), DeviceNet (registered trademark), or CompoNet (registered trademark).

Memory card interface 313 is configured such that a memory card 340 is detachable, and can write a user program or data such as various settings to memory card 340 or read the program or data such as various settings from memory card 340. USB controller 314 can transmit and receive data to and from any information processing device including support device 110 through USB connection.

Although the configuration example in which required functions are provided by processor 301 executing the program has been described in Fig. 3, some or all of these provided functions may be implemented using a dedicated hardware circuit (for example, an application specific integrated circuit (ASIC) and a field-programmable gate array (FPGA)). Alternatively, the main part of control unit 200 may be implemented using hardware (for example, an industrial personal computer based on a general-purpose personal computer) according to a general-purpose architecture. In this case, the plurality of OSs having different uses may be executed in parallel using a virtualization technology, and the required application may be executed on each OS.

### (c. Hardware configuration of support device 110)

A hardware configuration example of support device 110 that can be connected to control system 1 of the embodiment will be described below.

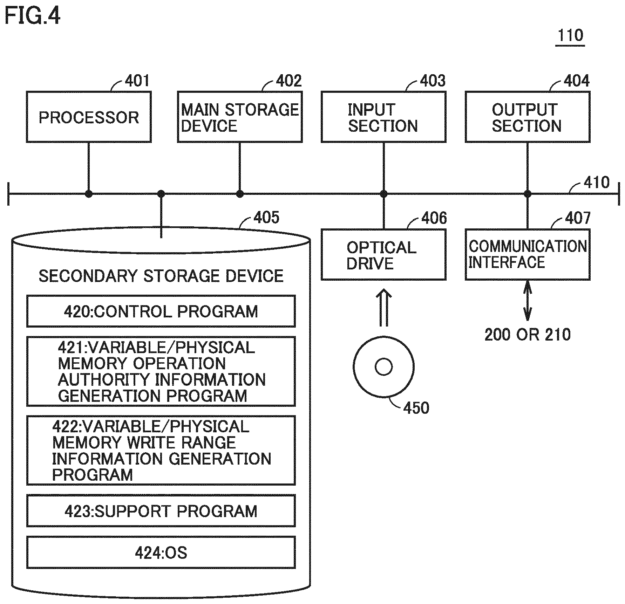

Fig. 4 is a schematic diagram illustrating the hardware configuration example of support device 110 that can be connected to control system 1 of the embodiment. Support device 110 can be implemented using a device (such as a personal computer or a tablet) having a general-purpose architecture.

With reference to Fig. 4, support device 110 includes a processor 401 such as a CPU or a GPU, a main storage device 402, an input unit 403, an output unit 404, a secondary storage device 405, an optical drive 406, and a communication interface 407. These components are connected to each other through a processor bus 410. Because main storage device 402 and secondary storage device 405 can be configured similarly to main storage device 304 and secondary storage device 303 of control unit 200, the description thereof will not be repeated.

Processor 401 reads a program (as an example, an OS 424 and a support program 423) stored in secondary storage device 405, develops the program in main storage device 402, and executes the program, thereby implementing various pieces of processing.

In addition to OS 424 implementing the basic function, support program 423 providing the function as support device 110 is stored in secondary storage device 405. Support device 110 (substantially processor 401) executes support program 423 to implement functions of various support tools provided by support device 110. The support tool provides a program development environment in support device 110.

In addition, secondary storage device 405 stores a control program 420 generated using a support tool, a variable/physical memory operation authority information generation program 421, and a variable/physical memory write range information generation program 422. Control program 420 may be a source code of the program executed by control unit 200. In addition, control program 420 may include an execution file of the program executed by control unit 200.

Variable/physical memory operation authority information generation program 421 refers to a variable rule 800 and a physical memory rule 810 (see Fig. 8), and generates variable operation authority information 500 or physical memory operation authority information 510 including the access authority of each of the variable included in control program 420 or the value indicated by the physical memory.

Variable/physical memory write range information generation program 422 generates write range information 600 about the variable or write range information 610 (see Fig. 6) about physical memory that include a range of a writable value in each of the variable or the physical memory included in control program 420. In one aspect, variable/physical memory write range information generation program 422 may generate write range information 600 about the variable or write range information 610 (see Fig. 6) about the physical memory based on operation authority information 500 or physical memory operation authority information 510. In this case, secondary storage device 405 stores information about a predetermined write range for each security level of the variable or the physical memory. For example, the security level of the variable or the physical memory may be determined by which authority (manager, designer, or the like) user account has access to the value indicated by the variable or the physical memory.

In one aspect, secondary storage device 405 may store the encrypted control program obtained by encrypting control program 420. Furthermore, secondary storage device 405 may store the key encrypting the control program 420 and the encryption processing program. In addition, secondary storage device 405 may store a simple encryption processing program. Processor 401 can generate the simple encrypted control program by executing the simple encryption processing program.

Input unit 403 is configured by a keyboard, a mouse, and the like, and receives the user operation. Output unit 404 is configured by a display, various indicators, a printer, or the like and outputs a processing result and the like from processor 401.

Support device 110 includes optical drive 406. Optical drive 406 reads the program stored in recording medium 450 (for example, an optical recording medium such as a digital versatile disc (DVD)) from recording medium 450, and installs the program in secondary storage device 405 or the like.

Communication interface 407 can transmit and receive the data to and from control unit 200 or security unit 210 included in control system 1 through an arbitrary communication medium such as USB or Ethernet.

Support program 423 and the like executed by support device 110 may be installed through computer-readable recording medium 450, or installed by being downloaded from the server device or the like on the network. The functions provided by support device 110 of the embodiment are implemented using a part of modules provided by OS.

Although the configuration example in which the required functions as support device 110 are provided by processor 401 executing the program has been described in Fig. 4, some or all of these provided functions may be mounted using a dedicated hardware circuit (for example, ASIC or FPGA). In the embodiment, support device 110 may be removed from control system 1 during the operation of control system 1.

Support device 110 transmits generated control program 420 or the encrypted control program to control unit 200. Further, support device 110 transmits variable operation authority information 500 or physical memory operation authority information 510 and write range information 600 about the variable or write range information 610 about the physical memory to control unit 200. Control unit 200 stores received variable operation authority information 500 or physical memory operation authority information 510 and write range information 600 about the variable or write range information 610 about the physical memory in secondary storage device 303 as a part of access control information 322.

When the access request is made for the value indicated by the variable or physical memory referred to in control program 420, control unit 200 can determine whether to accept or reject the access request by referring to variable operation authority information 500 or physical memory operation authority information 510.

Furthermore, when the access request is a write request, control unit 200 can determine whether to accept or reject the write request by referring to write range information 600 about the variable or write range information 610 about the physical memory.

In one aspect, control unit 200 may previously store variable/physical memory operation authority information generation program 421 and variable/physical memory write range information generation program 422 in secondary storage device 303. In this case, control unit 200 generates variable operation authority information 500 or physical memory operation authority information 510 and write range information 600 about the variable or write range information 610 about the physical memory from received control program 420 or the encrypted control program.

### <C. Access control information>

Various types of information included in access control information 322 for implementing the access control for each value indicated by the variable or the physical memory will be described below.

Fig. 5 is a view illustrating an example of variable operation authority information 500 and physical memory operation authority information 510. Variable operation authority information 500 indicates read and write operation restriction (access authority) with respect to each variable for each authority of the user account. Physical memory operation authority information 510 indicates the read and write operation restriction (access authority) with respect to each physical memory for each authority of the user account.

In one aspect, variable operation authority information 500 and physical memory operation authority information 510 may be expressed as a table of a relational database, or may be expressed in any other data format such as JavaScript (registered trademark) Object Notation (JSON).

Variable operation authority information 500 includes variable 501, operation 502, and access restriction 503 for each authority of the user account as data items. Furthermore, variable operation authority information 500 may include an identifier that uniquely identifies each record.

Variable 501 includes each variable name included in control program 420. Operation 502 includes at least two operation methods, that is, the read and the write. The read is an operation referring to a value indicated by a certain variable. The write is an operation changing or overwriting a value indicated by a certain variable.
Access restriction 503 is restriction of the read and the write for each authority of the user account.

In the example of Fig. 5, the user account of an "administrator" has both read and write authorities for a variable "AAAAAAA". Conversely, the user account of "operator" does not have both the read and write authority to variable "AAAAAAA". Regarding variable "AAAAAAA", only "administrator, designer" has the authority of both the read and the write. On the other hand, regarding a variable "BBBBBBB ", more user accounts "administrator, designer, and maintenance person" have the authority of both the read and the write. In this case, it can be said that the security level of variable "AAAAAAA" is higher than the security level of variable "BBBBBBB".

Physical memory operation authority information 510 includes physical memory 511, an operation 512, and an access restriction 513 for each authority of the user account as data items. Furthermore, physical memory operation authority information 510 may include an identifier uniquely identifying each record.

Physical memory 511 includes the address of each physical memory included in control program 420. In one aspect, physical memory 511 may include the range of the address of the physical memory. Operation 512 includes at least two operation methods, that is, the read and the write. The read is an operation referring to the value indicated by a certain physical memory. The write is an operation changing or overwriting the value indicated by a certain physical memory. Access restriction 513 is a restriction of the read and the writ for each authority of the user account.

In the example of Fig. 5, the user account of the "administrator" has both the read and write authorities for a physical memory "D0000". Conversely, the user account of the "operator" does not have both the read and write authorities for physical memory "D0000". Regarding physical memory "D0000", only "administrator, designer" has both the read and write authorities. On the other hand, regarding a physical memory "D0001", more user accounts "administrator, designer, and maintenance person" have both the read and write authorities. In this case, it can be said that the security level of physical memory "D0000" is higher than the security level of physical memory "D0001".

When control program 420 includes the variable, control unit 200 or support device 110 generates variable operation authority information 500. On the other hand, when control program 420 includes the physical memory, control unit 200 or support device 110 generates physical memory operation authority information 510. In one aspect, when control program 420 includes both the variable and the physical memory, control unit 200 or support device 110 may generate information in which operating authority information 500 about the variable and operating authority information 510 about the physical memory are combined, and use the information for the access control.

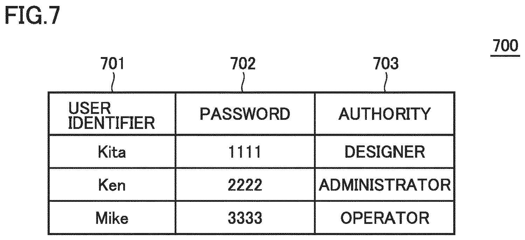

Control unit 200 determines whether to accept the access request for the value indicated by the variable or the physical memory based on variable operation authority information 500 or physical memory operation authority information 510 and user account information 700 (see Fig. 7).

Fig. 6 is a view illustrating an example of write range information 600 about the variable and write range information 610 about the physical memory. Write range information 600 about the variable indicates the range of the value that can be written to each variable for each authority of the user account. Write range information 610 about the physical memory indicates the range of the value that can be written to each physical memory for each authority of the user account.

In one aspect, write range information 600 about the variable and write range information 610 about the physical memory may be expressed as a table of a relational database, or may be expressed in any other data format such as JavaScript (registered trademark) Object Notation (JSON).

Write range information 600 about the variable includes a variable 601, a write range 602, and write operation restriction 603 for each authority of the user account as data items. Furthermore, write range information 600 about the variable may include the identifier uniquely identifying each record.

Variable 601 includes each variable name included in control program 420. Write range 602 is a range of the value that can be written in a certain variable. Write operation restriction 603 is write operation restriction of the value indicated by write range 602 for each authority of the user account.

In the example of Fig. 6, the user account for "administrator" can write value "0-100" in a variable "CCCCCCC". The user account of the "maintainer" may write a value "50-90" to variable "CCCCCCC". The user account of "operator" can only write a value "50" in variable "CCCCCCC".

Write range information 610 about the physical memory includes a physical memory 611, a write range 612, and write operation restriction 613 for each authority of the user account as data items. Furthermore, write range information 610 about the physical memory may include the identifier uniquely identifying each record.

Physical memory 611 includes the address of each physical memory included in control program 420. In one aspect, physical memory 511 may include the range of the address of the physical memory. Write range 612 is the range of the value that can be written in a certain physical memory. Write operation restriction 613 is write operation restriction for each authority of the user account.

In the example of Fig. 6, the user account of "administrator" can write value "0-100" to an address "D0002" of the physical memory. The user account of "maintainer" may write value "50-90" to variable "D0002". The user account of "operator" can only write value "50" to the variable "D0002".

When control program 420 includes the variable, control unit 200 or support device 110 generates write range information 600 about the variable. Conversely, when control program 420 includes the physical memory, control unit 200 or support device 110 generates write range information 610 about the physical memory. In one aspect, when control program 420 includes both the variable and the physical memory, control unit 200 or support device 110 may generate information in which write range information 600 about the variable and write range information 610 about the physical memory are combined, and use the information for the access control.

Control unit 200 determines whether to accept the write request based on write range information 600 about the variable or write range information 610 about the physical memory, and user account information 700.

Fig. 7 is a view illustrating an example of user account information 700. In one aspect, user account information 700 may be expressed as the table of the relational database, or may be expressed in any other data format such as JavaScript (registered trademark) Object Notation (JSON). User account information 700 includes a user identifier 701, a password 702, and authority 703.

User identifier 701 uniquely indicates the user. In one aspect, the user may include the device or the system as well as a human. As an example, another device or system may send the access request for the value indicated by the variable or the physical memory of control unit 200. Password 702 is a password for authentication for each user. Authority 703 is authority (or attribute) of each user.

In the example of Fig. 7, the password of the user indicated by a user identifier "Kita" is "1111". The authority of the user indicated by user identifier 701 "Kita" is the "designer". In this case, the user indicated by user identifier 701 "Kita" has the authority of the read and the write for a variable "AAAAAAA, BBBBBBB, CCCCCCC" or a physical memory "D0000, D0001, D0002" (see Fig. 5). The user indicated by user identifier 701 "Kita" has the authority to write value "0-100" in variable "CCCCCCC" or physical memory "D0002" (see Fig. 6). The password may be actually encrypted.

Fig. 8 is a view illustrating an example of variable rule 800 and physical memory rule 810. Variable rule 800 includes a variable naming rule and the access restriction associated with each variable name. Physical memory rule 810 includes the range of the physical memory and the access restriction associated with each range of the physical memory.

In one aspect, variable rule 800 and physical memory rule 810 may be expressed as the table in the relational database, or may be expressed in any other data format such as JavaScript (registered trademark) Object Notation (JSON).

Variable rule 800 includes a variable name rule 801, an operation 802, and access restriction 803 for each authority of the user account.

Variable name rule 801 includes a naming rule of a variable name by an arbitrary format such as regular expression. Operation 802 includes read and write operations. Access restriction 803 is restriction of the read and the write for each authority of the user account.

In the example of Fig. 8, only the "administrator, designer" has the authority to read and write the variable in which the variable name starts with "OEM". The "administrator, designer, and maintenance person" has the authority to read and write the variable in which the variable name starts with "ACL". Furthermore, the "operator, observer" has only the read authority for the variable in which the variable name starts with "ACL".

Physical memory rule 810 includes a physical memory range 811, an operation 812, and access restriction 813 for each authority of the user account as data items.

As an example, physical memory range 811 includes the range indicated by a start address and an end address of the physical memory. As another example, physical memory range 811 may include the address of one physical memory or the addresses of a plurality of successive physical memories. Operation 802 includes read and write operations. Access restriction 803 is restriction of the read and the write for each authority of the user account.

In the example of Fig. 8, only the "administrator, designer" has the authority to read and write a physical memory "D0000 to D0100". In addition, the "administrator, designer, and maintenance person" has the authority to read and write a physical memory "D0201 to D0300". Furthermore, the "operator, observer" has only the read authority for a physical memory "D0201 to D0300".

Variable/physical memory operation authority information generation program 421 refers to variable rule 800 and physical memory rule 810, and generates variable operation authority information 500 and physical memory operation authority information 510 from control program 420.

When support device 110 executes variable/physical memory operation authority information generation program 421, support device 110 stores variable rule 800 and/or physical memory rule 810 in secondary storage device 405. When control unit 200 executes variable/physical memory operation authority information generation program 421, control unit 200 stores variable rule 800 and/or physical memory rule 810 in secondary storage device 303.

As an example, the user can previously generate variable rule 800 and physical memory rule 810 using support device 110 (support tool or the like). Generated variable rule 800 and physical memory rule 810 may be stored in secondary storage device 405 or may be transmitted to control unit 200.

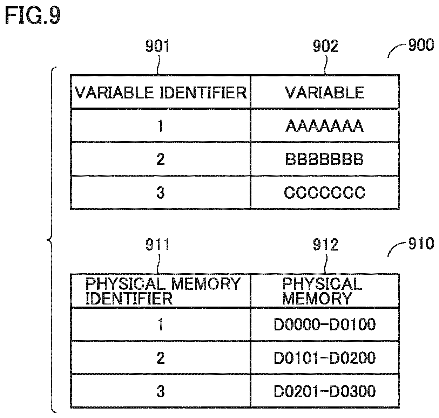

Fig. 9 is a view illustrating an example of a variable master 900 and a physical memory master 910. Variable master 900 includes all variables defined in control program 420. Variable master 900 includes all physical memories that can be used in control program 420.

In one aspect, variable master 900 and physical memory master 910 may be expressed as the table of the relational database, or may be expressed in any other data format such as JavaScript (registered trademark) Object Notation (JSON).

Variable master 900 includes a variable identifier 901 and a variable 902 as data items. Variable identifier 901 uniquely identifies the variable. Variable 902 includes the name of the variable defined in control program 420.

Physical memory master 910 includes a physical memory identifier 911 and a physical memory 912 as data items. Physical memory identifier 911 uniquely identifies the physical memory or the range of the physical memory. Physical memory 912 includes the physical memory or the range of the physical memory that can be used in control program 420.

In one aspect, support device 110 or control unit 200 may first generate variable master 900 or physical memory master 910 from control program 420. In this case, support device 110 or control unit 200 can generate variable operation authority information 500 or physical memory operation authority information 510 based on variable master 900 or physical memory master 910 and variable rule 800 or physical memory rule 810.

In another aspect, support device 110 or control unit 200 may generate variable operation authority information 500 or physical memory operation authority information 510 without using variable master 900 or physical memory master 910.

### <D. Access control procedure>

An access control procedure by control unit 200 of the embodiment will be described below.

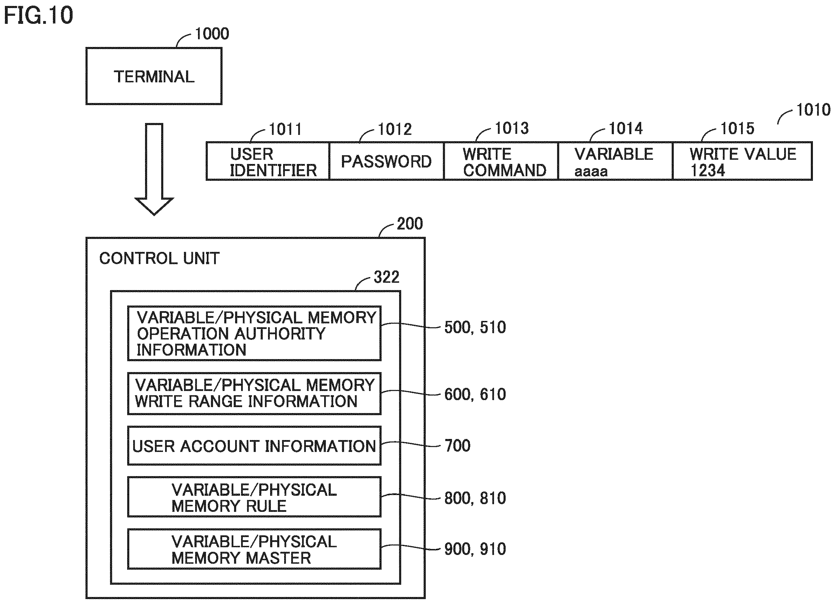

Fig. 10 is a view illustrating an example of the access request to control unit 200. It is assumed that control unit 200 receives an access request 1010 for the value indicated by a certain variable or physical memory from a terminal 1000. Terminal 1000 may be support device 110, display device 140, other control system 1, or any other device.

Access request 1010 in Fig. 10 is a write request, and includes a user identifier 1011, a password 1012, a write command 1013, a variable 1014, and a write value 1015 as an example.

As another example, when access request 1010 is a read request, access request 1010 may include a read command instead of write command 1013 and write value 1015 as an example. Access request 1010 may include the physical memory instead of variable 1014.

User identifier 1011 uniquely identifies the user who transmits access request 1010. Password 1012 is a password authenticating the user. Write command 1013 is a command executed by control unit 200. Variable 1014 is a variable name of a target of the write processing. Write value 1015 is a value written in the variable.

Based on the reception of access request 1010, control unit 200 authenticates the user account that sends access request 1010 with reference to user account information 700. Subsequently, control unit 200 determines whether to accept access request 1010 based on variable operation authority information 500 or physical memory operation authority information 510.

Furthermore, based on that access request 1010 is the write request, control unit 200 refers to variable write range information 600 or physical memory write range information 610 to determine whether to accept the write request. Control unit 200 accepts the write request when the variable or the value written to the physical memory falls within the authority of the user account that sends access request 1010, and otherwise, the write request is rejected.

Furthermore, when accepting access request 1010, control unit 200 generates a change history based on the change in the value indicated by each variable or physical memory (the write processing is performed). The change history is stored in secondary storage device 303. In one aspect, the change history may include a variable name or physical memory address indicating an updated value, the updated value, and a user identifier of a user who updates the value.

The change history may record only a change record of the value indicated by each variable or physical memory separately from an access log. When the change history and the log are separated, the change history is not buried in a huge log, but the administrator of control system 1 can easily check whether the unauthorized access or the like is gained by checking the change history. As an example, the change history includes the changed address of the variable or physical memory, the values before and after the change, and the user identifier of the user who has executed the write processing.

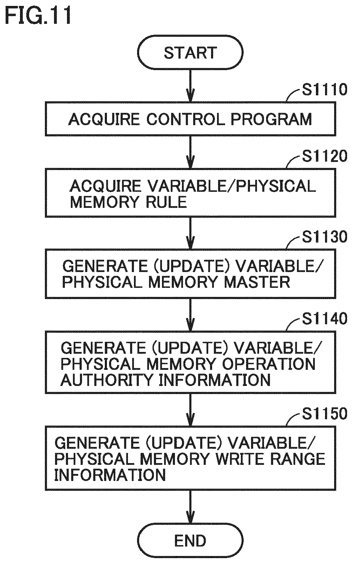

Fig. 11 is a view illustrating an example of a generation procedure of access control information 322. In one aspect, the processing in Fig. 11 may be executed by either control unit 200 or support device 110.

When control unit 200 executes the processing in Fig. 11, processor 301 may read the program executing the processing in Fig. 11 from secondary storage device 303 into main storage device 304 and execute the program. In another aspect, a part or all of the processing can be implemented as a combination of circuit elements configured to execute the processing.

When support device 110 executes the processing in Fig. 11, processor 401 may read the program performing the processing in Fig. 11 from secondary storage device 405 into main storage device 402 and execute the program. In another aspect, a part or all of the processing can be implemented as a combination of circuit elements configured to execute the processing.

Hereinafter, the description will be given assuming that control unit 200 executes the processing in Fig. 11, but even when support device 110 executes the processing in Fig. 11, the procedure except for the transmission of generated access control information 322 to control unit 200 is the same.

In step S1110, control program 420 is acquired from support device 110. Control program 420 may be encrypted or unencrypted. When acquiring encrypted control program 420, control unit 200 executes decryption processing.

In step S1120, processor 301 acquires variable rule 800 and physical memory rule 810. In one aspect, processor 301 may obtain variable rule 800 and physical memory rule 810 stored in secondary storage device 303. In another aspect, processor 301 may receive variable rule 800 and physical memory rule 810 from support device 110.

In step S1130, processor 301 generates or updates variable master 900 and physical memory master 910. When the variable is used in control program 420, processor 301 generates variable master 900 including all variables referred to in control program 420. When the physical memory is used in control program 420, processor 301 generates physical memory master 910 including all the physical memories provided by control unit 200. Physical memory master 910 may be previously stored in secondary storage device 303.

In step S1140, processor 301 generates variable operation authority information 500 and/or physical memory operation authority information 510. More specifically, processor 301 generates variable operation authority information 500 based on variable rule 800 and variable master 900. Processor 301 also generates physical memory operation authority information 510 based on physical memory rule 810 and physical memory master 910. Processor 301 may extract the variable or the physical memory from control program 420 in processing of step S1140 without executing the processing of step S1130.

In step S1150, processor 301 generates variable write range information 600 and/or physical memory write range information 610. More specifically, secondary storage device 303 (secondary storage device 405 when support device 110 executes the processing in Fig. 11) may previously include a rule (not illustrated) of the write range based on the security level of the variable or physical memory (which authority user account can access). Processor 301 can generate variable write range information 600 based on variable operation authority information 500 and the rule of the write range based on the security level of the variable. In addition, processor 301 can generate physical memory write range information 610 based on physical memory operation authority information 510 and the rule of the write range based on the security level of the physical memory.

When executing the processing in Fig. 11, support device 110 transmits the information generated in each step to control unit 200 as a part of access control information 322.

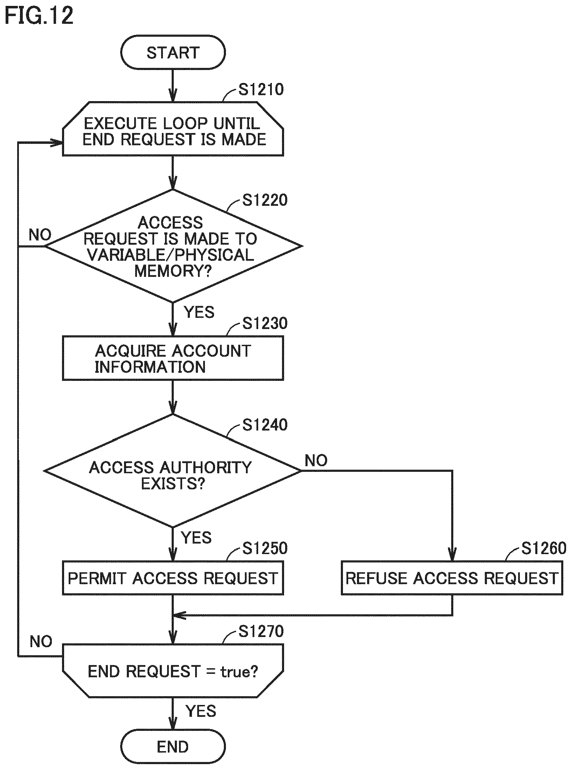

Fig. 12 is a view illustrating an example of the access control procedure by control unit 200. In one aspect, processor 301 may read the program performing the processing in Fig. 12 from secondary storage device 303 to main storage device 304 and execute the program. In another aspect, a part or all of the processing can be implemented as a combination of circuit elements configured to execute the processing.

In step S1210, processor 301 repeatedly executes the processing in a loop until the end request is made. The end request may be input to control unit 200 by the user, or may be transmitted from an external instrument to control unit 200. Alternatively, processor 301 may always continue to execute the processing of step S1220 and subsequent steps while control unit 200 is operated.

In step S1220, processor 301 determines whether the access request exists to the variable or the physical memory. When determining that the access request exists to the variable or the physical memory (YES in step S1220), processor 301 shifts the control to step S1230. Otherwise (NO in step S1220), processor 301 shifts the control to step S1210.

In step S1230, processor 301 acquires user account information 700. User account information 700 may be previously stored in secondary storage device 303.

In step S1240, processor 301 determines whether the user who transmits the access request has the access authority to the value indicated by the variable or physical memory in which the access request is made. When processor 301 determines that the user who transmits the access request has the access authority to the value indicated by the variable or physical memory in which the access request is made (YES in step S1240), the control proceeds to step S1250. Otherwise (NO in step S1240), processor 301 shifts the control to step S1260.

In step S1250, processor 301 permits (accepts) the access request. More specifically, processor 301 executes read processing of the value indicated by the variable or physical memory or write processing to the variable or physical memory based on the instruction included in the access request. In one aspect, the change history may include a variable name or physical memory address indicating an updated value, the updated value, and a user identifier of a user who updates the value. When executing the write processing, processor 301 generates or updates the change history and stores the change history in secondary storage device 303.

In step S1260, processor 301 refuses the access request. In step S1270, processor 301 determines whether the end request is accepted. When determining that the end request is accepted (YES in step S1270), processor 301 ends the processing. Otherwise (NO in step S1270), processor 301 returns the control to step S1210.

As described above, control unit 200 of the embodiment includes access control information 322 for each variable or physical memory. Thus, control unit 200 can determine whether to accept the access request for each variable or physical memory. Furthermore, control unit 200 of the embodiment can restrict the write range for each variable or physical memory based on the security level of the variable or physical memory.

In one aspect, control unit 200 or support device 110 of the embodiment can generate the variable operation authority information based on control program 420. Thus, the user can easily generate variable operation authority information 500 by defining the variable with the predetermined naming rule in control program 420.

In another aspect, control unit 200 or support device 110 of the embodiment may previously hold physical memory operation authority information 510. Thus, control unit 200 can automatically determine whether to accept the access request for each physical memory.

### <E. Appendix>

As described above, the embodiment includes the following disclosure.

### (Configuration 1)

A control system (1,200) including:
a control unit (301) configured to control a control target;
a storage unit (303) configured to store a program (420) executed by the control unit (301) and an access authority (500, 510) for each of a plurality of data referred to in the program (420); and
an input unit (305, 314) configured to accept an access request for any one of the plurality of data,
in which
each of the access authorities (500, 510) includes information about an operation executable by each of users having different authorities, and
the control unit (301)
   refers to each of the access authorities (500, 510) based on acquisition of the access request for any one of the plurality of data from the input unit (305, 314), and
   determines whether the user who transmits the access request has an access authority (500, 510) to access data for which the access is requested, based on each of the access authorities (500, 510).

### (Configuration 2)

The control system (1, 200) of configuration 1, in which each of the plurality of data is data indicated by an address of a variable or a physical memory in the program (420).

### (Configuration 3)

The control system (1, 200) of configuration 2, in which
the storage unit (303) further stores information (600, 610) about a write range for each of the variable or the physical memory, and
the control unit (301) restricts a range of a value writable for the variable or the physical memory in which the access request is made based on information (600, 610) about the write range.

### (Configuration 4)

The control system (1, 200) of configuration 2 or 3, in which the access authority (500, 510) for each of the plurality of data is generated based on a first rule (800) defining an access authority (500, 510) for each variable name or a second rule (810) defining an access authority (500, 510) for each physical memory.

### (Configuration 5)

The control system (1, 200) of configuration 4, further including a device (110) configured to generate the program (420),
in which the device (110)
analyzes the program (420) based on the first rule (800) or the second rule (810),
generates each of the access authorities (500, 510) based on an analysis result, and
outputs each of the access authorities (500, 510) to the storage unit (303).

### (Configuration 6)

The control system (1, 200) of configuration 4, in which
the storage unit (303) further stores the first rule (800) or the second rule (810), and
the control unit (301)
   analyzes the program (420) using the first rule (800) or the second rule (810) based on acquisition of the program (420) from another device,
   generates each of the access authorities (500, 510) based on an analysis result, and
outputs each of the access authorities (500, 510) to the storage unit (303).

### (Configuration 7)

The control system (1, 200) of any one of configurations 2 to 6, in which
the control unit (301) stores an update history in the storage unit (303) based on an update of any one of a plurality of data referred to in the program (420), and
the update history includes an address a variable name of a physical memory that indicates updated data, the updated data, and a user identifier of a user who updates the data.

### (Configuration 8)

A control method for a control device, the control method comprising:
accessing a program (420) executed by the control device and an access authority (500, 510) for each of a plurality of data referred to in the program (420), the access authority (500, 510) including information about an operation executable by each of users having different authorities;
referring to each of the access authorities (500, 510) based on acquisition of an access request for any one of the plurality of data; and
determining whether a user who transmits the access request has an access authority (500, 510) to access data for which the access is requested, based on each of the access authorities (500, 510)

### (Configuration 9)

The control method of configuration 8, in which each of the plurality of data is data indicated by an address of a variable or a physical memory in the program (420).

### (Configuration 10)

The control method of configuration 9, further including:
accessing information (600, 610) about a write range for each of the variable or the physical memory; and
restricting a range of a value writable for the variable or the physical memory in which the access request is made based on information (600, 610) about the write range.

### (Configuration 11)

The control method of configuration 9 or 10, in which the access authority (500, 510) for each of the plurality of data is generated based on a first rule (800) defining an access authority (500, 510) for each variable name or a second rule (810) defining an access authority (500, 510) for each physical memory.

### (Configuration 12)

The control method of configuration 11, further including:
analyzing the program (420) based on the first rule (800) or the second rule (810);
generating each of the access authorities (500, 510) based on an analysis result; and
outputting each of the access authorities (500, 510).

### (Configuration 13)

The control method of any one of configurations 9 to 12, further including generating an update history based on an update of any one of a plurality of data referred to in the program (420),
in which the update history includes an address of a variable name or a physical memory that indicates updated data, the updated data, and a user identifier of a user who updates the data.

It should be considered that the disclosed embodiment is an example in all respects and not restrictive. The scope of the present disclosure is defined by not the description above, but the claims, and it is intended that all modifications within the meaning and scope of the claims and their equivalents are included in the present invention. In addition, the disclosed contents described in the embodiment and the modification are intended to be implemented alone or in combination as much as possible.

### REFERENCE SIGNS LIST

1: control system, 100: network system, 110: support device, 120: server device, 130: gateway, 140: display device, 150: network, 160: field network, 170: control target, 200: control unit, 210: security unit, 220: safety unit, 230: functional unit, 240: power supply unit, 301, 401: processor, 302: chip set, 303, 405: secondary storage device, 304, 402: main storage device, 305: communication controller, 306: indicator, 307: switch interface, 308: dip switch, 309: internal bus controller, 310, 311, 312: network controller, 313: memory card interface, 314: controller, 320: system program, 321: Service program, 322: access control information, 323: nonvolatile storage region, 324: encrypted control program, 325: volatile storage region, 326: encrypted control program, 330: bus, 340: memory card, 403: input unit, 404: output unit, 406: optical drive, 407: communication interface, 410: processor bus, 420: control program, 421: operation authority information generation program, 422: write range information generation program, 423: support program, 424: OS, 450: recording medium, 500, 510: operation authority information, 501, 601, 902, 1014: variable, 502, 512, 802, 812: operation, 503, 513, 803, 813: access restriction, 511, 611, 912: physical memory, 600, 610: write range information, 602, 612: write range, 603, 613: write operation restriction, 700: user account information, 701, 1011: user identifier, 702, 1012: password, 703: authority, 800, 810: rule, 801: variable name rule, 811: physical memory range, 900: variable master, 901: variable identifier, 910: physical memory master, 911: physical memory identifier, 1000: terminal, 1010: access request, 1013: write command, 1015: write value

## Claims

1. A control system comprising:
a control unit configured to control a control target;
a storage unit configured to store a program executed by the control unit and an access authority for each of a plurality of data referred to in the program; and
an input unit configured to accept an access request for any one of the plurality of data,
wherein
each of the access authorities includes information about an operation executable by each of users having different authorities, and
the control unit refers to each of the access authorities based on acquisition of the access request for any one of the plurality of data from the input unit, and determines whether the user who transmits the access request has an access authority to access data for which the access is requested, based on each of the access authorities.

2. The control system according to claim 1, wherein each of the plurality of data is data indicated by an address of a variable or a physical memory in the program.

3. The control system according to claim 2, wherein
the storage unit further stores information about a write range for each of the variable or the physical memory, and
the control unit restricts a range of a value writable for the variable or the physical memory in which the access request is made based on information about the write range.

4. The control system according to claim 2 or 3, wherein the access authority for each of the plurality of data is generated based on a first rule defining an access authority for each variable name or a second rule defining an access authority for each physical memory.

5. The control system according to claim 4, further comprising a device configured to generate the program,
wherein the device analyzes the program based on the first rule or the second rule, generates each of the access authorities based on an analysis result, and outputs each of the access authorities to the storage unit.

6. The control system according to claim 4, wherein
the storage unit further stores the first rule or the second rule, and
the control unit analyzes the program using the first rule or the second rule based on acquisition of the program from another device, generates each of the access authorities based on an analysis result, and outputs each of the access authorities to the storage unit.

7. The control system according to any one of claims 2 to 6, wherein
the control unit stores an update history in the storage unit based on an update of any one of a plurality of data referred to in the program, and
the update history includes an address of a variable name or a physical memory that indicates updated data, the updated data, and a user identifier of a user who updates the data.

8. A control method for a control device, the control method comprising:
accessing a program executed by the control device and an access authority for each of a plurality of data referred to in the program, the access authority including information about an operation executable by each of users having different authorities;
referring to each of the access authorities based on acquisition of an access request for any one of the plurality of data; and
determining whether a user who transmits the access request has an access authority to access data for which the access is requested, based on each of the access authorities.

9. The control method according to claim 8, wherein each of the plurality of data is data indicated by an address of a variable or a physical memory in the program.

10. The control method according to claim 9, further comprising:
accessing information about a write range for each of the variable or the physical memory; and
restricting a range of a value writable for the variable or the physical memory in which the access request is made based on information about the write range.

11. The control method according to claim 9 or 10, wherein the access authority for each of the plurality of data is generated based on a first rule defining an access authority for each variable name or a second rule defining an access authority for each physical memory.

12. The control method according to claim 11, further comprising:
analyzing the program based on the first rule or the second rule;
generating each of the access authorities based on an analysis result; and
outputting each of the access authorities.

13. The control method according to any one of claims 9 to 12, further comprising generating an update history based on an update of any one of a plurality of data referred to in the program,
wherein the update history includes an address of a variable name or a physical memory that indicates updated data, the updated data, and a user identifier of a user who updates the data.
